# EUROPEAN PATENT APPLICATION

(11) **EP 4 365 820 A1**
(43) Date of publication of application: **08.05.2024**
(21) Application number: 21950444.6
(22) Date of filing: 20.07.2021
(51) Int. Cl.: G06T 3/40, H04N 19/132

(54) **VIDEO SUPER-RESOLUTION NETWORK, AND VIDEO SUPER-RESOLUTION, ENCODING AND DECODING PROCESSING METHOD AND DEVICE**

(71) Applicant: GUANGDONG OPPO MOBILE TELECOMMUNICATIONS CORP., LTD., Dongguan, Guangdong 523860 (CN)
(72) Inventor: YUAN, Hui, Dongguan, Guangdong 523860 (CN); FU, Congrui, Dongguan, Guangdong 523860 (CN); LIU, Yao, Dongguan, Guangdong 523860 (CN); YANG, Ye, Dongguan, Guangdong 523860 (CN); LI, Ming, Dongguan, Guangdong 523860 (CN)
(74) Representative: Taor, Simon Edward William
(86) International application number: PCT/CN2021/107449
(87) International publication number: WO 2023/000179

(57) **Abstract**

A video super-resolution network, and a video super-resolution, encoding and decoding processing method and device. The video super-resolution network extracts shallow features and deep features of a low-resolution video frame sequence on the basis of 3D convolution, and reconstructs a video frame sequence of higher resolution. A discriminator network of the video super-resolution network uses two branches to respectively determine detail features and motion information features. Super-resolution of video frames in a video compression process can enhance image quality. Decoded super-resolution processing can also be combined with uncoded downsampling processing so as to transmit and restore low-bit rate images.

## Description

### TECHNICAL FIELD

Embodiments of the present disclosure relate to, but are not limited to, picture processing techniques, and in particular to a video super-resolution network, a video super-resolution processing method, an encoding processing method and a decoding processing method and apparatuses.

### BACKGROUND

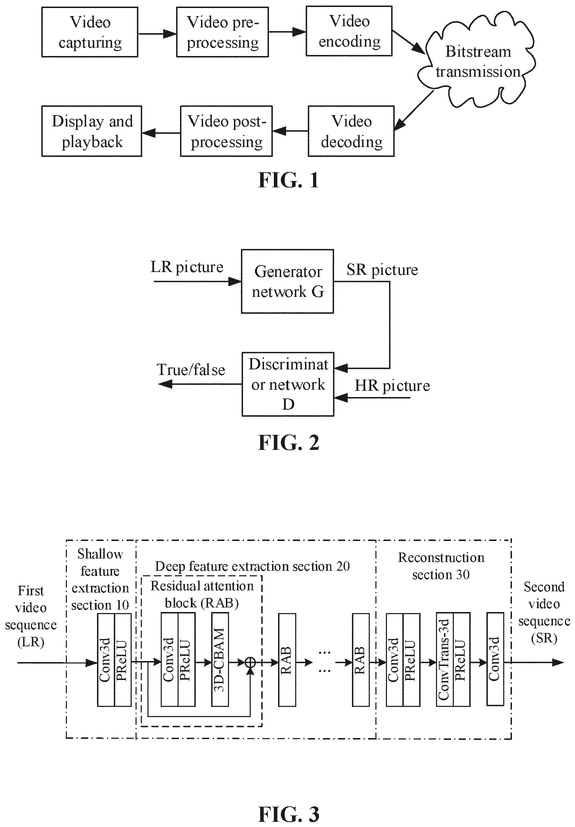

A general video compression process is illustrated in FIG. 1. At an encoding end, a video capturing, a video pre-processing, a video encoding and other processes are included. At a decoding end, a video decoding, a video post-processing, a display and a playback, and other processes are included. In the video pre-processing, sometimes the frame rate of the video will be reduced for the limitation of bandwidth and bit rate, meanwhile a picture quality will be degraded during video compression encoding. The video post-processing after video decoding is an important part to improve a video quality, but an improvement effect needs to be enhanced.

### SUMMARY

The following is a summary of subjects described in detail herein. The summary is not intended to limit the scope of protection of claims.

There is provided a video super-resolution network in an embodiment of the present disclosure, including a generator network. The generator network includes a first feature extraction section, a second feature extraction section and a reconstruction section connected in sequence, where:
the first feature extraction section is configured to receive a first video sequence, extract a first feature from the first video sequence based on a three dimensional (3D) convolution, and output the first feature;
the second feature extraction section is configured to receive the first feature, extract a second feature in time and/or space from the first feature based on a 3D residual attention mechanism, and output the second feature; and
the reconstruction section is configured to receive the second feature, realize feature fusion and spatio-temporal super-resolution of features based on the 3D convolution and a 3D up-sampling, reconstruct a video sequence based on the 3D convolution, and generate a second video sequence, and a resolution of the second video sequence is greater than a resolution of the first video sequence.

There is also provided a video super-resolution processing method in an embodiment of the present disclosure, which includes the following operations.

A first feature is extracted from a first video sequence based on a 3D convolution.

A second feature in time and/or space is extracted from the first feature based on a 3D residual attention mechanism.

Feature fusion and spatio-temporal super-resolution of features for the second feature are realized based on the 3D convolution and a 3D up-sampling; a video sequence is reconstructed based on the 3D convolution, and a second video sequence is generated, where a resolution of the second video sequence is greater than a resolution of the first video sequence.

There is also provided a video decoding processing method in an embodiment of the present disclosure, which includes the following operations.

A bitstream is decoded to obtain a first video sequence.

It is determined whether the first video sequence satisfies a set super-resolution condition.

In a case that the set super-resolution condition is satisfied, the first video sequence is outputted to a video super-resolution network to perform video super-resolution processing, and a second video sequence is obtained, where a resolution of the second video sequence is greater than a resolution of the first video sequence.

There is also provided a video encoding processing method in an embodiment of the present disclosure, which includes the following operations.

It is determined whether to perform down-sampling on a video sequence from a data source when performing video pre-processing.

In a case of determining not to perform down-sampling, the video sequence from the data source is directly inputted into a video encoder for video encoding.

In a case of determining to perform down-sampling, a down-sampling is performed on the video sequence from the data source, and a down-sampled video sequence is inputted into the video encoder for video encoding.

There is also provided a video super-resolution processing apparatus, including a processor and a memory storing a computer program executable by the processor, herein the processor is configured to implement, when running the computer program, the video super-resolution processing method as described in any embodiment of the present disclosure.

There is also provided a video decoding processing apparatus, including a processor and a memory storing a computer program executable by the processor, herein the processor is configured to implement, when running the computer program, the video decoding processing method as described in any embodiment of the present disclosure.

There is also provided a video decoding processing apparatus in an embodiment of the present disclosure, which includes a video decoder, a super-resolution determining device and a video super-resolution network.

The video decoder is configured to decode a bitstream to obtain a first video sequence.

The super-resolution determining device is configured to determine whether the first video sequence satisfies a set super-resolution condition, in a case that the set super-resolution condition is satisfied, output the first video sequence to a video super-resolution network for video super-resolution processing; and in a case that the set super-resolution condition is not satisfied, determine to skip a video super-resolution processing for the first video sequence.

The video super-resolution network is configured to perform video super-resolution processing on the first video sequence to obtain a second video sequence with a resolution greater than that of the first video sequence.

There is also provided a video encoding processing apparatus, including a processor and a memory storing a computer program executable by the processor, herein the processor is configured to implement, when running the computer program, the video encoding processing method as described in any embodiment of the present disclosure.

There is also provided a video encoding processing apparatus in an embodiment of the present disclosure, which includes a down-sampling determining module, a down-sampling device and a video encoder.

The down-sampling determining module is configured to determine whether to perform down-sampling on a video sequence from a data source when performing video pre-processing, in a case of determining to perform down-sampling, output the video sequence from the data source to a down-sampling device, in a case of determining not to perform down-sampling, output the video sequence from the data source directly to a video encoder for video encoding.

The down-sampling device is configured to perform down-sampling on an inputted video sequence and output a down-sampled video sequence to the video encoder for encoding.

The video encoder is configured to perform video encoding on the video sequence from the data source or the down-sampled video sequence.

There is also provided a video encoding and decoding system in an embodiment of the present disclosure, which includes a video encoding processing apparatus as described in embodiments of the present disclosure and a video decoding processing apparatus as described in embodiments of the present disclosure.

There is also provided a bitstream in an embodiment of the present disclosure, where the bitstream is generated according to the video encoding processing method of the embodiments of the present disclosure, and the bitstream includes the down-sampling flag.

There is also provided a non-transitory computer-readable storage medium in an embodiment of the present disclosure, having stored thereon a computer program. The computer program is executed by a processor to implement the method as described in any embodiment of the present disclosure.

After reading and understanding drawings and detailed description, other aspects can be understood.

### BRIEF DESCRIPTION OF THE DRAWINGS

The accompanying drawings are used to provide an understanding of the embodiments of the present disclosure, and constitute a part of the description. The accompanying drawings together with the embodiments of the present disclosure, serve to explain the technical solution of the present disclosure, and are not limiting to the technical solution of the present disclosure.
FIG. 1 is a schematic diagram of a video compression process.
FIG. 2 is an architectural diagram of a generative adversarial network.
FIG. 3 is a structural diagram of a generator network according to an embodiment of the present disclosure.
FIG. 4 is a structural diagram of a 3D residual attention mechanism model according to an embodiment of the present disclosure.
FIG. 5 is a structural diagram of a discriminator network according to an embodiment of the present disclosure.
FIG. 6 is a flowchart of a video super-resolution processing method according to an embodiment of the present disclosure.
FIG. 7A is a schematic diagram of performing a super-resolution on decoded video sequences according to an embodiment of the present disclosure.
FIG. 7B is an architecture diagram of a video decoder according to an embodiment of the present disclosure.
FIG. 8A is an architecture diagram of a video encoder according to an embodiment of the present disclosure.
FIG. 8B is a schematic diagram of a scalable video encoding architecture according to an embodiment of the present disclosure, which illustrates only portions closely related to up-sampling and down-sampling.
FIG. 8C is a schematic diagram of a scalable video decoding architecture according to an embodiment of the present disclosure, which illustrates only portions closely related to up-sampling.
FIG. 9 is a flowchart of a video encoding processing method according to an embodiment of the present disclosure.
FIG. 10 is a flowchart of a video decoding processing method according to an embodiment of the present disclosure, which corresponds to the video encoding processing method illustrated in FIG. 9.
FIG. 11 is an architecture diagram of a video encoding and decoding system according to an embodiment of the present disclosure.
FIG. 12 is a structural diagram of a video encoding processing apparatus according to an embodiment of the present disclosure.

### DETAILED DESCRIPTION

Multiple embodiments are described in the present disclosure, but the description is exemplary and not limiting, and it will be apparent to those of ordinary skill in the art that more embodiments and implementations may be included within the scope of the embodiments described in the present disclosure.

In the description of the present disclosure, the word "exemplary" or "for example" are used as examples, exemplifies, or illustrations. Any embodiment described in the present disclosure as "exemplary" or "for example" should not be construed as being preferred or superior to other embodiments. In the present disclosure, "and/or" is used to describe an association relationship of associated objects, and represents that there may be three relationships. For example, A and/or B may represent the following three situations: i.e., independent existence of A, existence of both A and B and independent existence of B. "Multiple" means two or more. In addition, in order to clearly describe the technical proposal of the embodiments of the present disclosure, the words "first", "second" and the like are used to distinguish the same items or similar items with substantially the same functions and effects. Those skilled in the art will appreciate that the words "first", "second" and the like are not limited in number or order of execution, and that the words "first", "second" and the like are not limited to having to be different.

When describing representative exemplary embodiments, the method and/or process may have been rendered as a specific sequence of operations in the description. However, to the extent that the method or process does not depend on the specific order of the operations described herein, the method or process should not be limited to the specific order of operations. As will be understood by those of ordinary skill in the art, other orders of operations are also possible. Accordingly, the specific order of the operations set forth in the description should not be construed as limiting the claims. Furthermore, the claims for the method and/or process should not be limited to perform the operations in the written order. It may be readily understood by those skilled in the art that these orders may vary and remain within the spirit and scope of embodiments of the present disclosure.

Referring to FIG. 1, the video post-processing is mainly aimed at a quality loss in the process of video pre-processing, video encoding and video decoding, so as to enhance the picture quality of video and increase the picture number of video. In order to improve the video quality, some methods are used to filter the compressed picture with filters. However, these methods improve the visual effect of the picture by smoothing the distortion introduced by video compression mainly, instead of restoring the pixel value of the picture itself. In order to improve the frame rate of video pictures, a non-block matching based frame rate boosting algorithm and a block matching based frame rate boosting algorithm may be adopted. The non-block matching based frame rate boosting algorithm does not consider the motion of objects in the picture, but uses linear interpolation of adjacent video pictures to generate new video pictures. This algorithm has low computational complexity, but the video pictures have jitter and blur phenomena. The block matching based frame rate boosting algorithm improves the frame rate of video pictures by estimating the motion vector of the object and interpolating the motion trajectory of the object. The quality of video pictures obtained by interpolation will be improved, but the complexity will be higher.

A Super-Resolution (abbreviated as SR herein) refers to improving the resolution of an original picture by hardware or software methods. The process of obtaining a High Resolution (HR) picture from one or more Low Resolution (LR) pictures is a super-resolution process. A Super-resolution technology may reconstruct low resolution video to high resolution video pictures by deep learning, which brings good video experience to users.

An embodiment of the present disclosure provides a Generative Adversarial Network (GAN). As illustrated in FIG. 2, the network includes a generator network G, also known as a generator, capable of capturing data distributions, and includes a discriminator network D, also known as a discriminator, capable of estimating a probability that the data comes from the real sample. In this framework, the generator network and discriminator network are trained at the same time, and the best generation effect can be achieved by the antagonism between these two networks. When training the generator network, the input is low resolution picture, and the output is reconstructed super-resolution picture. When training the discriminator, the inputs are a super-resolution picture and a real picture, and the output is a probability that an input picture comes from the real picture. The low resolution picture may be obtained by performing down-sampling on the real picture. The training process of the generator network is to maximize the probability that the discriminator will make an error, so that the discriminator thinks that the data is a real picture (true sample) mistakenly instead of a super-resolution picture (false sample) generated by the generator. A training goal of discriminator network is to maximize the separation of true samples and false samples. Therefore, this framework corresponds to a minimax game between two participants. In all possible network parameters, the unique equilibrium solution may be obtained, so that after the false sample generated by the generator network enters the discriminator network, a result given by the discriminator network is close to 0.5.

An embodiment of the present disclosure provides a method for realizing super-resolution based on a generative adversarial network, where the corresponding network is Super-Resolution Generative Adversarial Networks (SRGAN) in the network framework of the SRGAN. A core of the generator network is multiple residual blocks with the same layout. A batch-normalization layer (BN) and a Rectified Linear Unit (ReLU) are used as an activation function, and two trained sub-pixel convolution layers are used to increase the resolution of the input picture. The discriminator network consists of eight incremental convolution layers, which grow according to kernel functions from 2 to 64 to 512. The resulting 512 feature maps are followed by two fully connected layers (also known as dense layers) and a final sigmoid activation function to obtain the probability of sample categories. However, SRGAN cannot achieve super-resolution in time and space at the same time to fully extract useful features from different dimensions, which has limited improvement on video quality. A structure of discriminator network of SRGAN is single, and it does not use optical flow information, so its discriminator ability is limited. Therefore, the quality of high resolution pictures reconstructed by the network still needs to be improved.

An embodiment of the present disclosure provides a video super-resolution network, including a generator network for realizing a video spatio-temporal super-resolution function. The generator network uses a 3D convolution to realize the spatio-temporal super-resolution function. First, shallow features are extracted based on the 3D convolution, and then deep features are extracted by a series of residual attention blocks (RABs). Each RAB block itself uses a residual learning and a 3D attention mechanism to further improve the quality of spatio-temporal super-resolution.

As illustrated in FIG. 3, the generator network includes a first feature extraction section 10, a second feature extraction section 20 and a reconstruction section 30 connected in sequence, where:

the first feature extraction section 10 is configured to receive a first video sequence, extract a first feature from the first video sequence based on a 3D convolution, and output the first feature;

the second feature extraction section 20 is configured to receive the first feature, extract a second feature in time and/or space from the first feature based on a 3D residual attention mechanism, and output the second feature; and

the reconstruction section 30 is configured to receive the second feature, realize feature fusion and spatio-temporal super-resolution of features based on the 3D convolution and a 3D up-sampling, reconstruct a video sequence based on the 3D convolution, and generate a second video sequence, and a resolution of the second video sequence is greater than a resolution of the first video sequence.

The second feature is extracted from the first feature, and the first feature may be referred to as a shallow feature and the second feature is referred to as a deep feature.

The first video sequence may also be referred to as a video sequence with a low resolution and the second video sequence may be referred to as a video sequence with a high resolution or a super-resolution video sequence.

The above-mentioned picture resolution and video frame rate may be collectively referred to as a resolution, where the picture resolution may also be referred to as a spatial resolution and the video frame rate may also be referred to as a temporal resolution.

The resolution of the second video sequence is greater than the resolution of the first video sequence, which may be: the picture resolution of the second video sequence is greater than the picture resolution of the first video sequence, and/or the video frame rate of the second video sequence is greater than the video frame rate of the first video sequence.

In an exemplary embodiment of the present disclosure, the first feature extraction section includes a 3D convolution layer and an activation layer connected in sequence, such as Conv3d and PReLU in FIG. 3, and an input of the 3D convolution layer is the first video sequence, and an output of the activation layer is the first feature.

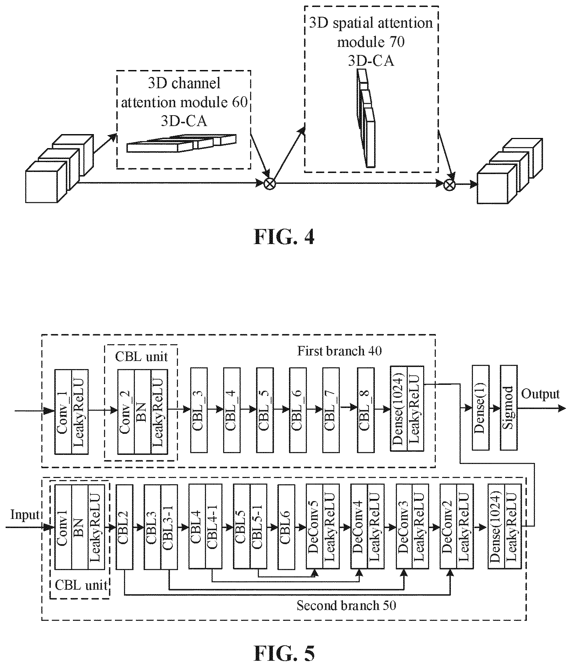

In an exemplary embodiment of the present disclosure, the second feature extraction section includes a plurality of residual attention blocks (RABs) connected in sequence, as illustrated in FIG. 3. An input of a first RAB is the first feature, an input of each of other RABs except the first RAB is an output of a previous RAB, and an output of a last RAB is the second feature. An RAB includes a 3D convolution layer, an activation layer and a 3D attention mechanism model unit connected in sequence, such as Conv3d, PReLU, and 3D-CBAM in FIG. 5. An input of the RAB is sent to the 3D convolution layer, and the input of the RAB has a skip connection with an output of the 3D attention mechanism model unit and is added with the output of the 3D attention mechanism model unit to obtain a sum as an output of the RAB.

In an exemplary embodiment of the present disclosure, the 3D attention mechanism model unit employs a 3D convolution block attention model (3D-CBAM), as illustrated in FIG. 4, the 3D convolution block attention model includes a 3D channel attention module 60 and a 3D spatial attention module 70, and an input of the 3D attention mechanism model unit is sent to the 3D channel attention module, a first product obtained by multiplying an input and an output of the 3D channel attention module is used as an input of the 3D spatial attention module, and a second product obtained by multiplying an output of the 3D spatial attention module and the first product is used as the output of the 3D attention mechanism model unit.

In some techniques, the attention mechanism is designed in a two-dimensional space, and the 3D-CBAM of the embodiment of the present disclosure expands on the two-dimensional basis, adds a depth dimension, and considers the change of depth parameters when extracting channel features and spatial features every time. For the input 3D feature map, 3D-CBAM deduces channel attention feature map and spatial attention feature map in sequence.

When the 3D channel attention module is implemented, the input feature map may be inputted into the shared multilayer perceptron after maximum pooling and mean pooling based on width, height and depth respectively. Then the addition operation based on corresponding elements is performed respectively, activation is performed by sigmoid function to generate the initial channel feature map, and the initial channel feature map is multiplied by the input feature map to generate the final channel feature map.

When the 3D spatial attention module is implemented, the final channel feature map may be taken as the input feature map of the 3D spatial attention module, and the channel-based maximum pooling operation and mean pooling operation are performed on it. The extracted features are then merged based on the channel, and then reduced into a channel by the convolution operation (such as 7×7 convolution, 3×3 convolution, etc.), and then activation is performed by sigmoid function to generate the spatial attention feature map. Finally, the generated spatial attention feature map is multiplied by the input final channel feature map to obtain a feature map outputted by 3D-CBAM.

The 3D attention mechanism considers the changes of space and time simultaneously when extracting features, so that the 3D attention mechanism can better adapt to the purpose to be achieved by the video super-resolution network of the embodiment of the present disclosure and has better adaptive learning. The 3D channel attention module pays more attention to which channels play a role in the final super-resolution, and selects the features that play a decisive role in prediction. The 3D spatial attention module pays attention to which pixel positions will play a more important role in the network prediction. Using these two attention mechanism modules together can maximize the learning ability of the network and get better spatio-temporal super-resolution result.

In an exemplary embodiment of the present disclosure, referring to FIG. 3, the reconstruction section 30 includes the following units connected in sequence:

a 3D convolution unit for fusing features, including a 3D convolution layer and an activation layer connected in sequence(such as Conv3D and PReLu in FIG. 3), where an input of the 3D convolution unit for fusing features is the second feature; PReLu is a Parametric Rectifier Linear Unit.

a 3D transposed convolution unit for realizing spatio-temporal super-resolution of the features, including a 3D transposed convolution layer and an activation layer connected in sequence (such as ConvTrans-3D and PReLu in FIG. 5), where an input of the 3D transposed convolution unit is an output of the 3D convolution unit for fusing features, and the 3D transposed convolution can realize the function of up-sampling; and

a 3D convolution layer for generating a video sequence (such as Conv3D in FIG. 5), an input being an output of the 3D transposed convolution unit and an output being the second video sequence.

In an exemplary embodiment of the present disclosure, the activation function used by the activation layer is PReLu. There are many kinds of activation functions, and other activation functions may also be used here.

The characteristics of the generator network of the embodiment of the present disclosure include that: the time and space features of the video may be extracted simultaneously by adopting the 3D convolution, the feature extraction is more accurate, and the consumption of computing resources is further reduced compared with the method of extracting time information and the method of extracting space information respectively. The generator network adopts the 3D attention mechanism, which can concentrate the features extracted by the network well, so as to get better reconstruction results. The generator network may adopt a variable number of RAB blocks, and the network structure is more flexible, and the number may be selected freely according to the computing resources to meet the needs of different scenarios.

The generator network may be used independently as a video super-resolution network to complete the video super-resolution function. In an exemplary embodiment of the present disclosure, the video super-resolution network further includes a discriminator network, and the overall architecture of a video super-resolution network composed of a generator network and a discriminator network is illustrated in FIG. 2. The inputs of the discriminator network during training are the real video sequence and the second video sequence generated by the generator network, which are respectively used as the true sample and the false sample inputting into the discriminator network. The output of the discriminator network is the probability that an inputted video sequence is a real video picture. A first video sequence as input data during training the generator network is obtained by degrading a real video sequence. For example, the first video sequence as a training set may be obtained by one or more of down-sampling, blurring, adding noise, and compressing encoding and decoding the real video sequence. There are many manners of down-sampling, including linear manners, such as a nearest neighbor sampling, a bilinear sampling, a Bicubic down-sampling, a mean down-sampling and so on; also including non-linear manners, such as a neural network down-sampling. A plurality of down-sampling multiples may be set to obtain a first video sequence with different resolutions, thereby training a plurality of groups of network parameters. When in use, the network parameters of a video super-resolution network can be flexibly set according to needs to obtain different super-resolution effects.

In an embodiment of the present disclosure, the video super-resolution network further includes a discriminator network, which is configured to, during training, take a real video sequence and the second video sequence generated during training the generator network as inputs, extract detail features and motion information features between video pictures from inputted video sequences, and determine a probability that an inputted video sequence is the real video sequence based on the detail features and the motion information features. A resolution of the real video sequence is the same as that of the second video sequence, and the first video sequence received during training the generator network is obtained by performing down-sampling on the real video sequence.

In an exemplary embodiment of the present disclosure, as illustrated in FIG. 5, the discriminator network includes a first branch, a second branch, an information fusion unit connected with the first branch and the second branch, and a weight calculation unit connected with the information fusion unit, where:
the first branch 40 is configured to extract the detail features from the inputted video sequences based on a feature extraction network, and determine an authenticity based on the detail features;
the second branch 50 is configured to extract the motion information features between video pictures from the inputted video sequences based on an optical flow network, and determine an authenticity based on the motion information features;
the information fusion unit is configured to fuse authenticity determination results outputted by the first branch and the second branch; and
the weight calculation unit is configured to calculate a weight according to fused information outputted by the information fusion unit, and obtain the probability that the inputted video sequence is the real video sequence.

In an exemplary embodiment of the present disclosure, the information fusion unit is realized by adopting a fully connected layer (such as dense(1) in FIG. 5); the weight calculation unit is realized by a sigmoid function (such as the sigmod function in FIG. 5).

In an exemplary embodiment of the present disclosure, the first branch 40 includes following units connected in sequence:
a 2D convolution unit, including a 2D convolution layer and an activation layer connected in sequence, such as Conv_1 and LeakyReLU in FIG. 5;
a plurality of 2D convolution plus normalization units, each including a 2D convolution layer, a batch normalization (BN) layer and an activation layer connected in sequence; Conv_2 layer, BN layer and LeakyReLU in FIG. 5 constitute a 2D convolution plus normalization unit, and other 2D convolution plus normalization units are represented by CBL_2 to CBL_8 in the FIG. 5 respectively. Seven CBLs are used in the example of FIG. 5, but the present disclosure is not limited to this number. BN layer is used to accelerate the convergence rate of the network; and
a fully connected unit, including a fully connected layer and an activation layer connected in sequence, such as Dense (1024) and LeakyReLU in the first branch 40 in FIG. 5.

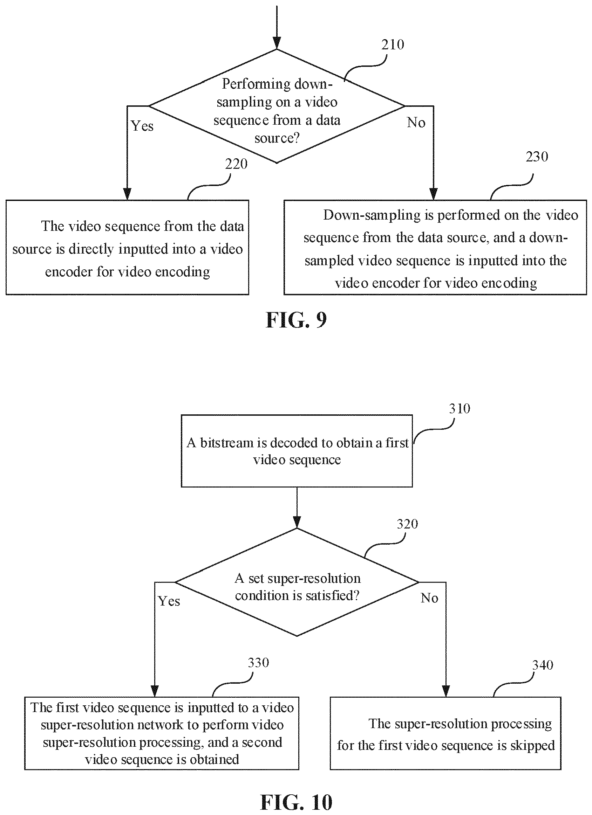

In an exemplary embodiment of the present disclosure, the second branch 50 includes following units connected in sequence:
N 2D convolution plus normalization units, each including a 2D convolution layer, a BN layer and an activation layer connected in sequence, N ≥ 2. In the second branch of FIG. 5, 9 2D convolution plus normalization units are illustrated. Conv1 layer, BN layer and LeakyReLU constitute the first 2D convolution plus normalization unit, and other 2D convolution plus normalization units are represented as CBL2, CBL3, CBL3-1, CBL4, CBL4-1, CBL5, CBL5-1 and CBL6;
M 2D deconvolution units, each including a 2D deconvolution layer and an active layer, M ≥ 2. Four 2D deconvolution units are illustrated in FIG. 5, in which the 2D deconvolution layers are represented as DeConv5, DeConv4, DeConv3 and DeConv2, respectively, and the activation layers are all LeakyReLU; and
a fully connected unit, including a fully connected layer and an activation layer connected in sequence, such as Dense (1024) and LeakyReLU in the second branch 50 in FIG. 5.

In an exemplary embodiment of the present disclosure, the output of the 2i-th 2D convolution plus normalization unit is also connected to the input of the M-i+1-th 2D deconvolution unit, 1 ≤ i ≤ M, N = 2M+1. In the example illustrated in FIG. 5, N = 9 and M = 4. The connection relationship is illustrated in FIG. 5. This network structure may realize the extraction of motion information features between video pictures and the authenticity determination.

In an exemplary embodiment of the present disclosure, the activation function used by the activation layer in the discriminator network is LeakReLu. There are many kinds of activation functions, and other activation functions may also be used here.

In an exemplary embodiment of the present disclosure, in the discriminator network illustrated in FIG. 5, the convolution layer parameters in the first branch 40 are set as shown in the following table:

| Conv_1 | Conv_2 | Conv_3 | Conv_4 |
|---|---|---|---|
| K3 s1 n64 | K3 s2 n64 | K3 s1 n128 | K3 s2 n128 |

| Conv_5 | Conv_6 | Conv_7 | Conv_8 |
|---|---|---|---|
| K3 s1 n256 | K3 s2 n256 | K3 s1 n512 | K3 s1 n512 |

K represents a size of a convolution kernel, s represents the stride, and n represents the number of convolution kernels. K3 represents a size of convolution kernel being 3, s1 represents a stride being 1, and n64 represents the number of convolution kernels being 64, and so on. The size of the convolution kernel and stride may be measured in pixels.

The parameters of the convolution layer in the second branch 50 are set as follows:

| Conv1 | Conv2 | Conv3 | Conv3-1 | Conv4 |
|---|---|---|---|---|
| K7 s2 n64 | K5 s2 n128 | K3 s3 n256 | K3 s1 n256 | K3 s2 n512 |

| Conv4-1 | Conv5 | Conv5-1 | Conv6 | |
|---|---|---|---|---|
| K3 s1 n512 | K3 s2 n512 | K3 s1 n512 | K3 s2 n1024 | |

| DeConv5 | DeConv4 | DeConv3 | DeConv2 | |
|---|---|---|---|---|
| K4 s2 n512 p1 | K4 s2 n256 p1 | K4 s2 n128 p1 | K4 s2 n64 p1 | |

K, s and n have the same meanings as the above table, and p represents padding.

The discriminator network of the embodiments of the present disclosure adopts two discriminator criteria, one is the feature of the video picture itself, and another is the motion information between the video pictures. Accordingly, the discriminator network includes two branches, the whole of which is a U-shaped network structure. One branch is used for extracting the detail features of the input video sequence and determination, and another branch uses an optical flow network to obtain the motion information features of the input video sequence and determination. It can identify the authenticity probability of the input video picture more accurately, that is, whether the input video picture is a real video sequence or a super-resolution video sequence (i.e., a second video sequence). Compared with using 2D attention mechanism, using 3D residual attention mechanism can better extract useful features in different dimensions and improve video quality.

A video super-resolution network of the embodiments of the present disclosure may be implemented using any of the following circuits or any combination of the following circuits: one or more microprocessors, digital signal processors, application specific integrated circuits, field programmable gate arrays, discrete logic and hardware. If the present disclosure is implemented in part in software, instructions for the software may be stored in a suitable non-volatile computer-readable storage medium, and the methods of the present disclosure may be implemented by executing the instructions in hardware using one or more processors.

The video spatio-temporal super-resolution network based on generative adversarial network in the embodiments of the present disclosure can improve the spatial resolution and temporal resolution of videos simultaneously, that is, super-resolution is performed on space and time, and multi-dimensional feature information is contained. It can enhance the picture quality and frame rate of low resolution video sequence significantly, and achieve two effects of video picture super-resolution and frame rate improvement by using one network simultaneously. In addition, the video space-time super-resolution network of the embodiments of the present disclosure uses of motion information at the discriminator network, which can further utilize the information of real video to further improve the performance of the whole network and improve the quality of video super-resolution compared with the use of optical flow information for motion estimation in the generator network part.

The network structure of the present disclosure can be changed on the basis of the above embodiments. For example, the number of RABs included in the generator network can be appropriately reduced or increased to meet the needs of different computing power in different scenarios.

An embodiment of the disclosure also provides a training method for the video super-resolution network of the embodiments of the present disclosure, which includes the following processes.

### Data pre-processing process:

7 pictures of the continuous video sequence as samples are selected, and the whole video is pruned into a block video sequence with a size of 7 × *sH* × *sW*, which is used as a high resolution real video sequence (abbreviated as HR sequence) of the training set. Each HR sequence has 7 pictures, and each HR video picture has a height of sH and a width of sW. Down-sampling may be performed on HR sequences simultaneously in time and space, and blocky low resolution video pictures (abbreviated as LR sequences) of 5 × *H* × *W* may be obtained. Setting smaller H and W values during training can reduce the training time and increase the complexity of data sets. All the training data are normalized so that the pixel values are within interval of (0, 1), which is better used for the training results of the network. Through the above processing, a sufficient number of LR sequences and HR sequences are obtained.

### Training process:

The parameters in the network are initialized by Kaiming initialization method, the learning rate is r = 1e-4, and the network parameters are optimized by Adam optimizer.

The LR sequence is used as the input data of the video super-resolution network, and the HR sequence is used as the target data of the video super-resolution network to train the generator network. The output of the generator network is a super-resolution video sequence (abbreviated as SR sequence) with the same size as the HR sequence. The SR sequence (i.e. false samples) and HR sequence (i.e. true samples) are sent into the discriminator network as input data for training of the discriminator network, in which HR sequence and SR sequence account for 50% each, and the discriminator network outputs the determination result, that is, the authenticity probability of the input data, or the probability that the input data is the HR sequence.

The determination result for the SR sequence and the HR sequence by the discriminator network is used to calculate the loss of the discriminator network and the adversarial loss of the generator network. The Mean Square Error (MSE) of the SR sequence and the HR sequence outputted by the generator network may be used as the loss function of the generator network. After many repeated iterations, until the network error reaches the preset allowable error, the training is finished, and the structural parameters of the network model are saved to obtain the trained video super-resolution network model based on the neural network.

In an example of the present disclosure, the video super-resolution network is implemented on the Nvidia GTX 1080Ti GPU using the PyTorch platform, which is an open source Python machine learning library. Vimeo-90K is used in the training set and test set of the experiment. 4 times super-resolution is realized on video picture pictures, and the frame rate is increased by 2 times. Experiments illustrate that the number of residual attention blocks (RABs) affects the experimental results. When the number of RABs is 3, 7, 9 and 12 respectively, the quality of SR video pictures generated when the number of RABs is 12 is the best. However, the quality of super-resolution video pictures using generative adversarial network is better than using only the generator network.

The video encoding end may be unable to provide high resolution video due to various objective restrictions. For example, the camera resolution is insufficient, the network bandwidth is insufficient, and the source resources are insufficient. Video super-resolution based on depth learning can restore picture details well. Therefore, with the help of video super-resolution processing, the video quality can be enhanced, high-quality video may be presented to users, and the subjective visual effect of pictures can be improved.

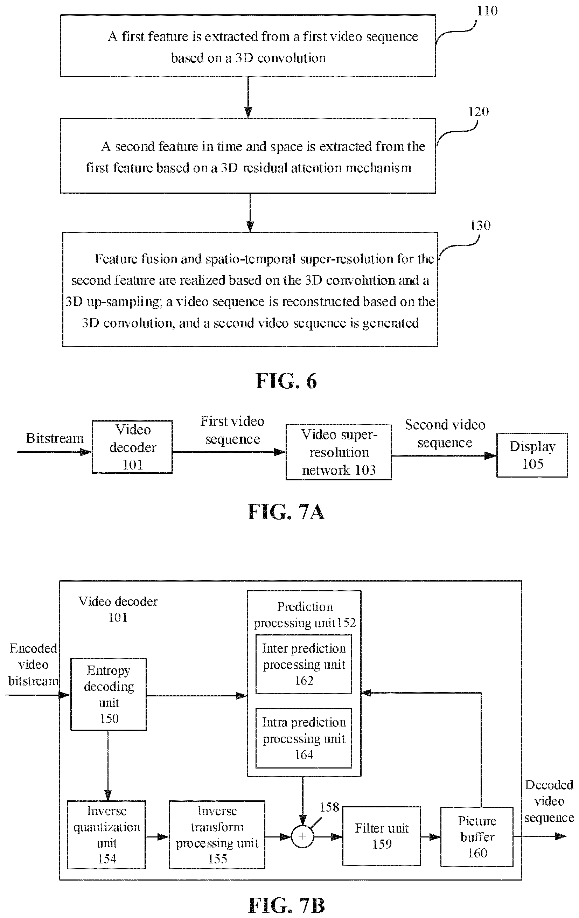

There is provided a video super-resolution processing method in an embodiment of the present disclosure, as illustrated in FIG. 6, which includes the following operations.

At operation 110, a first feature is extracted from a first video sequence based on a 3D convolution.

At operation 120, a second feature in time and/or space is extracted from the first feature based on a 3D residual attention mechanism.

At operation 130, feature fusion and spatio-temporal super-resolution of features for the second feature are realized based on the 3D convolution and a 3D up-sampling; a video sequence is reconstructed based on the 3D convolution, and a second video sequence is generated, where a resolution of the second video sequence is greater than a resolution of the first video sequence.

In an exemplary embodiment of the present disclosure, the video super-resolution processing method is implemented based on a video super-resolution network as described in any embodiment of the present disclosure.

In an exemplary embodiment of the present disclosure, the picture resolution of the second video sequence is greater than the picture resolution of the first video sequence, and/or the video frame rate of the second video sequence is greater than the video frame rate of the first video sequence.

Video super-resolution may be used in all aspects of video compression processing, such as the video post-processing processing at the decoding end, the video pre-processing processing at the encoding end, the video encoding process and video decoding process. The following are several examples to illustrate.

### First application scenario

A processing method is to adopt the conventional video encoding method, but increase the compression intensity, such as increasing the quantization stride, to perform encoding and obtain the video sequence with lower bit rate, and then improve the video quality through video super-resolution at the decoding end. That is, video super-resolution is applied to the post-processing process of video decoding. For example, super-resolution processing is performed on the decoded video sequence outputted by the decoder in a video playback device to improve the resolution of reconstructed video pictures.

In an exemplary embodiment of the present disclosure, when video super-resolution is applied to video post-processing, the first video sequence in the video super-resolution processing method illustrated in FIG. 6 is a decoded video sequence outputted by decoding a bitstream, and the video super-resolution processing is used to improve the resolution of the decoded video sequence. When applying video super-resolution to video post-processing, video super-resolution processing may be used to replace the original post-filtering, or the original post-processing filtering may be retained and video super-resolution processing may be added.

FIG. 7A is a structural block diagram of a video decoding end in the application scenario. As illustrated in the FIG. 7A, a video decoder 101, a video super-resolution network 103 and a display 105 are included.

The video decoder 101 is configured to decode an encoded video bitstream (abbreviated as a bitstream) to obtain a first video sequence.

The video super-resolution network 103 is configured to perform video super-resolution processing on the first video sequence to obtain a second video sequence with a resolution greater than that of the first video sequence.

The display 105 is configured to display and play the second video sequence.

The video decoder 101 of the embodiment may adopt a video decoder as illustrated in FIG. 7B. The structure of the video decoder may be used for video decoding of H.264/AVC, H.265/HEVC, WC/H.266 and other similar standards. In other embodiments, the video decoder 101 may also employ other types of video decoders, such as neural network-based video decoders in end-to-end video encoding and decoding techniques.

As illustrated in FIG. 7B, the video decoder 101 includes an entropy decoding unit 150, a prediction processing unit 152, an inverse quantization unit 154, an inverse transform processing unit 156, a reconstruction unit 158 (represented by a circle with a plus sign in the FIG. 7B), a filter unit 159 and a picture buffer 160. In other embodiments, the video decoder 30 may include more, fewer or different functional components.

The entropy decoding unit 150 may entropy decode the received bitstream, and extract information such as syntax elements, quantized coefficient blocks and motion information of the PU. The prediction processing unit 152, the inverse quantization unit 154, the inverse transform processing unit 156, the reconstruction unit 158 and the filter unit 159 may perform corresponding operations based on syntax elements extracted from the bitstream.

As a functional component performing the reconstruction operation, the inverse quantization unit 154 may inversely quantify the quantized TU-associated coefficient block. The inverse transform processing unit 156 may apply one or more inverse transforms to the inversely quantized coefficient blocks to generate a reconstruction residual block of the TU.

The prediction processing unit 152 includes an inter prediction processing unit 162 and an intra prediction processing unit 164. If the PU uses intra prediction encoding, the intra prediction processing unit 164 may determine an intra prediction mode of the PU based on syntax elements parsed from the bitstream, perform intra prediction according to the determined intra prediction mode and reconstructed reference information adjacent to the PU obtained from the picture buffer device 60, and generate a prediction block of the PU. If the PU uses inter prediction encoding, the inter prediction processing unit 162 may determine one or more reference blocks of the PU based on motion information of the PU and corresponding syntax elements and generate a prediction block of the PU based on the reference blocks.

The reconstruction unit 158 may obtain the reconstruction block of the CU based on the reconstructed residual block associated with the TU and the prediction block (i.e. intra prediction data or inter prediction data) of the PU generated by the prediction processing unit 152.

The filter unit 159 may perform loop filtering on the reconstructed block of the CU to obtain a reconstructed picture. The reconstructed picture is stored in the picture buffer 160. The picture buffer 160 may provide reference pictures for subsequent motion compensation, intra prediction, inter prediction and the like or may output the reconstructed video data as decoded video data for presentation on a display device.

The display 105 may for example be a liquid crystal display, a plasma display, an organic light emitting diode display, or other type of display device. In other examples, the decoding end may also not contain the display 105, but contain other devices to which the decoded data may be applied.

The embodiments of the present disclosure may be used to solve the problems of the loss of picture quality and the degradation of video frame rate generated in the video compression process. By applying video super-resolution network to the post-processing of decoding end, super-resolution in time and space may be performed on the video sequence outputted by decoding, which can improve the quality of video picture. In order to meet the requirements of decoding end for frame rate, the frame rate can be improved at the same time during post-processing, so as to present high-quality video with higher resolution and higher frame rate for users.

In the embodiment, the video super-resolution network is adopted to enhance the quality of the decoded video sequence, and the encoding end is not required to perform down-sampling on the video sequence during video pre-processing.

In an exemplary embodiment of the present disclosure, the first video sequence is a decoded video sequence outputted by decoding a bitstream. The video super-resolution processing method further includes the following operations: network parameter information of a video super-resolution network sent by an encoding end is phased from the bitstream, and a network parameter of the video super-resolution network is set according to the network parameter information. For different decoded video sequences, different network parameters, such as the number of RABs in the generator network, may be configured for the video super-resolution network to achieve better super-resolution effect. The appropriate network parameters may be generated by the encoding end and signalled in the bitsream, and the decoding end phases the network parameters from the bitstream and configures them, so as to obtain better quality enhancement effect.

### Second application scenario

In an exemplary embodiment of the present disclosure, the video super-resolution is applied to the video pre-processing process. For example, in the video pre-processing module of the video acquisition device, the collected original video sequence is inputted into the video super-resolution network of the embodiments of the present disclosure for processing, so as to obtain the output video with higher resolution and higher frame rate, and then the output video is encoded as the input video of the video encoder.

When video super-resolution is applied to video pre-processing in the embodiments, the first video sequence in the video super-resolution processing method illustrated in FIG. 6 is an original video sequence collected by a video acquisition device, and the video super-resolution processing can improve the resolution of the original video sequence.

### Third application scenario

Adaptive Resolution Change (ARC) allows for the transmission of video pictures with different resolutions according to the network state. Video pictures with a low resolution are transmitted when network bandwidth is low, and original resolution video pictures are transmitted when network bandwidth is high. In H.265 and H.264, an Instantaneous Decoding Refresh (IDR) picture or similar picture meeting a new resolution is inserted when the encoder wants to change the resolution during video transmission. However, the transmission of IDR pictures requires more bit rates, which will introduce delay for video conferencing applications. If IDR pictures are not inserted, the resolution difference between the current picture and the reference picture will cause problems in inter prediction. VP9 (VP9 is an open video compression standard developed by Google) solves this problem by reference picture resampling (RPR), so that pictures with different resolutions can be inter predicted directly. RPR has also been signalled in the Versatile Video Coding (VVC) standard. According to RPR, when the resolution of video sequence changes, in order to be able to perform motion compensation, it is necessary to resample the reference picture. Picture-based RPR puts the reference pictures before and after resampling into the Decoded Picture Buffer (DBP), and finds the reference picture with the corresponding resolution in the DPB for prediction when motion compensation is performed.

In an exemplary embodiment of the present disclosure, video super-resolution is applied to the processing of the RPR of the video encoding process, where the first video sequence in the video super-resolution processing method illustrated in FIG. 6 is a reference picture (which may be one or more reference pictures and may only improve the picture resolution) that needs to be up-sampled and is obtained from the DBP of the video encoder. The video super-resolution processing can realize up-sampling for the reference picture, and obtain a reference picture with larger picture resolution for selection in inter prediction.

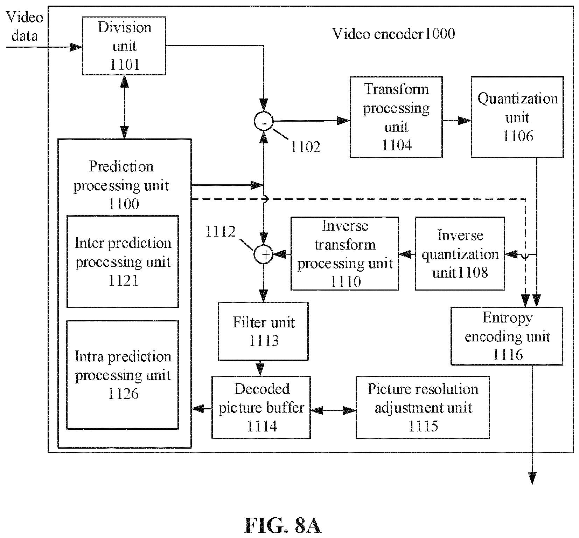

The video encoder 1000 illustrated in FIG. 8A may be used to implement RPR, which includes a picture resolution adjustment unit 1115. The super-resolution network of the embodiment in the present disclosure may be used for a picture resolution adjustment unit 1115 to realize up-sampling of the reference picture.

As illustrated in FIG. 8A, the video encoder 207 includes a prediction processing unit 1100, a division unit 1101, a residual generation unit 1102, a transform processing unit 1104, a quantization unit 1106, an inverse quantization unit 1108, an inverse transform processing unit 1110, a reconstruction unit 1112, a filter unit 1113, a decoded picture buffer 1114, a picture resolution adjustment unit 1115, and an entropy encoding unit 1116. The prediction processing unit 1100 includes an inter prediction processing unit 121 and an intra prediction processing unit 1126. In other embodiments, the video encoder 20 may include more, fewer or different functional components.

The division unit 1101 cooperates with the prediction processing unit 1100 to divide the received video data into slices, CTUs or other larger units. The video data received by the division unit 1101 may be a video sequence including video pictures such as I frames P frames or B frames.

The prediction processing unit 1100 may divide the CTU into CUs and perform intra prediction encoding or inter prediction encoding on the CUs. The CU may be divided into one or more prediction units (PU) for intra prediction and inter prediction.

The inter prediction processing unit 1121 may perform inter prediction on the PU and generate prediction data of the PU, the prediction data including prediction blocks of the PU, motion information of the PU and various syntax elements.

The intra prediction processing unit 1126 may perform intra prediction on the PU and generate prediction data of the PU. The prediction data of the PU may include prediction blocks of the PU and various syntax elements.

The residual generation unit 1102 may generate a residual block of the CU by the original block of the CU subtracting the prediction block of the PU divided from CU.

The transform processing unit 1104 may divide the CU into one or more transform units (TU), and the residual blocks associated with the TU are sub-blocks obtained by dividing the residual blocks of the CU. A TU-associated coefficient block is generated by applying one or more transformations to the TU-associated residual block.

The quantization unit 1106 may quantify the coefficients in the coefficient block based on the selected quantization parameter, and the degree of quantization of the coefficient block may be adjusted by adjusting the QP value.

The inverse quantization unit 1108 and inverse transform unit 1110 may apply inverse quantization and inverse transform to coefficient blocks respectively to obtain reconstructed residual blocks associated with TU.

The reconstruction unit 1112 may add the reconstruction residual block and the prediction block generated by the prediction processing unit 1100 to generate a reconstruction block of the CU.

The filter unit 1113 performs loop filtering on the reconstructed block and stores it as a reference picture in the decoded picture buffer 1114. The intra prediction processing unit 1126 may extract a reference picture of a block adjacent to the PU from the decoded picture buffer 1114 to perform intra prediction. The inter prediction processing unit 1121 may perform inter prediction on the PU of the current picture using the of the previous reference picture buffered by the decoded picture buffer 1114.

The picture resolution adjustment unit 1115 performs resampling on the reference pictures stored in the decoded picture buffer 1114, which may include up-sampling and/or down-sampling, and the obtained reference pictures with a plurality of resolutions is stored in the decoded picture buffer 1114.

The entropy encoding unit 1116 may perform an entropy encoding operation on received data (e.g. syntax elements, quantized system blocks, motion information and the like).

### Fourth application scenario

When the video encoder is affected by factors such as insufficient network bandwidth and insufficient source resources, another processing method is to adopt scalable video encoding. The scalable video encoding introduces concepts of Base Layer (BL) and Enhance Layer (EL). The important information (bits) for the decoded picture is transmitted in a guaranteed channel, and the collection of this important information is called the base layer. The secondary information (bits) is transmitted in an unsecured channel, and the collection of this data information is called the enhance layer. At the decoding end, the information of enhance layer is partially or completely lost, and the decoder can still recover acceptable picture quality from the information of base layer.

There are many types of scalable video encoding, such as spatial scalable encoding, temporal scalable encoding, frequency scalable encoding and quality scalable encoding. Taking spatial scalable encoding as an example, spatial scalable encoding generates multiple pictures with different spatial resolutions for each picture of video, and the low resolution picture is obtained by decoding the bitstream of the base layer. If the bitstream of the enhance layer is added to the decoder at the same time, the high resolution picture is obtained.

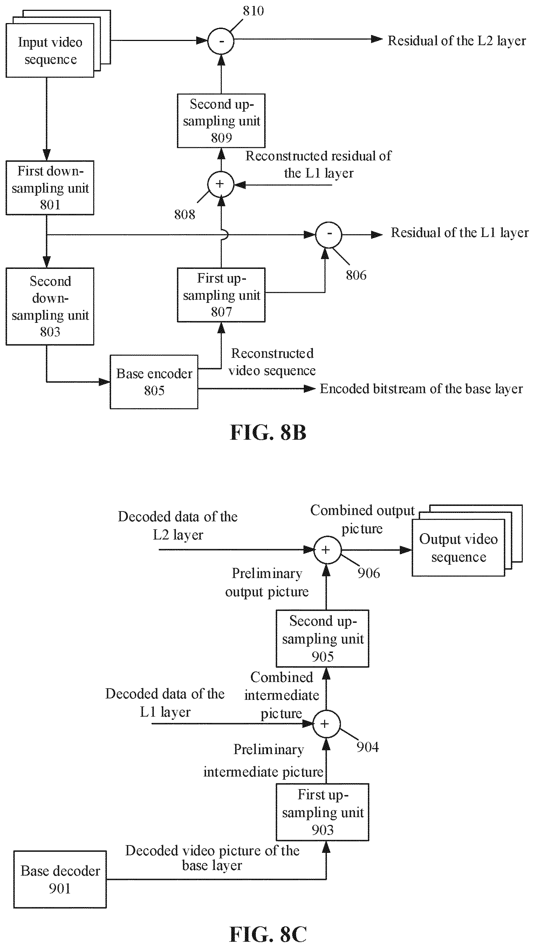

An exemplary scalable video encoding framework is illustrated in FIG. 8B, which includes a base layer, a first enhance sub-layer, i.e. an L1 layer and a second enhance sub-layer, i.e. an L2 layer. Only the parts of the encoding architecture closely related to up-sampling and down-sampling are illustrated in the FIG. 8B. The down-sampling is performed twice on the input video sequence by the first down-sampling unit 801 and the second down-sampling unit 803, and then the down-sampled input video sequence is sent to the base encoder 805 for encoding to output the encoded bitstream of the base layer. The reconstructed video picture of the base layer outputted by the base encoder 805 is up-sampled on the first up-sampling unit 807 to obtain the reconstructed video picture of the L1 layer. The first subtractor 806 subtracts the reconstructed video picture of the L1 layer from the original video picture of the L1 layer outputted by the first down-sampling unit 801 to obtain the residual of the L1 layer. The reconstructed video picture of the L1 layer and the reconstructed residual of the L1 layer are added in an adder 808 and then up-sampled in a second up-sampling unit 809 to obtain the reconstructed video picture of the L2 layer. The second subtractor 810 subtracts the L2 layer reconstructed video picture from the input video sequence to obtain the residual of the L2 layer. The scalable video encoding framework may also include three or more enhance sub-layers.

In an exemplary embodiment of the present disclosure, the video super-resolution is applied to a video encoding architecture including a base layer and an enhance layer, such as an encoder of Low Complexity Enhancement Video Coding (LCEVC), for generation of enhance layer data at the encoding side. In particular, the video super-resolution network of embodiments of the present disclosure may be used to implement an up-sampling unit in a scalable video encoding architecture.

In the embodiment, when the video super-resolution is applied to the scalable video encoding architecture, the first video sequence in the video super-resolution processing method illustrated in FIG. 6 is a reconstructed video sequence of the base layer or a reconstructed video sequence of the enhance sub-layer (such as L1 layer), which is generated in the scalable video encoding architecture including the base layer and the enhance layer. The video super-resolution processing can realize up-sampling of the reconstructed video sequence, to generate the residual of the corresponding enhance sub-layer.

### Fifth application scenario

In an exemplary embodiment of the present disclosure, the video super-resolution is applied to a scalable video decoding architecture that includes a base layer and an enhance layer. An exemplary scalable video decoding architecture, illustrated in FIG. 8C, includes a base layer, a first enhance sub-layer, i.e. L1 layer, and a second enhance sub-layer, i.e. L2 layer, but may also include one enhance sub-layer or more than three enhance sub-layers. Only those parts of the decoding architecture that are closely related to up-sampling are illustrated in the FIG. 8C. As illustrated in the FIG. 8C, the decoded video sequence of the base layer outputted by the base decoder 901 is up-sampled by the first up-sampling unit 903 to obtain a preliminary intermediate picture. The preliminary intermediate picture and the decoded data of the L1 layer are added at a first adder 904 to obtain a combined intermediate picture of the L1 layer. The combined intermediate picture is up-sampled by the second up-sampling unit 905 to obtain a preliminary output picture. The preliminary output picture and the decoded data of the L2 layer are added at a second adder 906 to obtain an output video sequence.

In the embodiment, the video super-resolution is applied to a video decoding architecture including a base layer and an enhance layer, such as a decoder of LCEVC, for generating data of enhance layer at the decoding side. In particular, the video super-resolution network of embodiments of the present disclosure may be used to implement an up-sampling unit in a scalable video decoding architecture. In the embodiment, when the video super-resolution is applied to the scalable video decoding architecture, the first video sequence in the video super-resolution processing method illustrated in FIG. 6 is a decoded video sequence of the base layer or a combined intermediate picture (which may be one or more pictures) of the enhance sub-layer generated in the scalable video decoding architecture including the base layer and the enhance layer, and the video super-resolution processing can realize up-sampling of the decoded video sequence to generate an initial intermediate picture, or realize performing up-sampling on the combined intermediate picture to generate an initial output picture.

In an embodiment of the present disclosure, before encoding the video, the video encoding end determines whether to perform down-sampling according to the current situation, for example, when the bandwidth and other resources are insufficient, the encoded data amount is reduced by down-sampling, so that the bitstream amount is greatly reduced. After decoding the bitstream, the video decoding end determines whether to perform super-resolution on the decoded video sequence. These methods can also achieve similar effects of scalable encoding. For example, when the network bandwidth is small, only the base video bitstream encoded after down-sampling is transmitted, while when the network bandwidth is larger, down-sampling is not performed, which is equivalent to transmitting enhanced video information, thereby obtaining self-adaptability and ensuring that most terminals with network connection can transmit multimedia information with appropriate bitstream. Moreover, this solution is superior to the solution that the encoding end encodes video pictures directly into pictures with the same bit rate, and then the decoding end uses super-resolution network to enhance the quality of the decoded pictures.

There is provided a video encoding processing method in an embodiment of the present disclosure, as illustrated in FIG. 9, the method includes the following operations.

At operation 210, it is determined whether to perform down-sampling on a video sequence from a data source when performing video pre-processing. If yes, operation 220 is executed, and if no, operation 230 is executed.

At operation 220, in a case of determining not to perform down-sampling, the video sequence from the data source is directly inputted into a video encoder for video encoding and a bitstream is generated. Then the end.

At operation 230, in a case of determining to perform down-sampling, a down-sampling is performed on the video sequence from the data source, and a down-sampled video sequence is inputted into the video encoder for video encoding and a bitstream is generated.

The video encoding processing herein includes video pre-processing and video encoding. The video pre-processing may include processing such as down-sampling. The video decoding process herein includes video decoding and video post-processing, and the video post-processing may include video super-resolution processing of embodiments of the present disclosure.

In an exemplary embodiment of the present disclosure, the operation that the down-sampling is performed on a video sequence from a data source includes that: the down-sampling is performed on a picture resolution and/or a video frame rate of the video sequence from the data source. When performing down-sampling, the appropriate down-sampling multiple may be selected according to the bandwidth and other factors, so that the encoded bit rate adapts to the bandwidth.

In an exemplary embodiment of the present disclosure, the video encoding processing method further includes that: when performing video encoding, a down-sampling flag is signalled in the bitstream, the down-sampling flag being used to indicate whether a pre-processing of the video sequence from the data source by an encoding end includes a down-sampling.

If the encoding end has performed down-sampling on the video sequence from the data source when pre-processing, and the video super-resolution network is trained based on the real video sequence and the first video sequence obtained by performing down-sampling on the real video sequence, the encoding end performs down-sampling on the video picture from the data source and then compresses and encodes the video picture to generate a bitstream. After the decoding end decodes the bitstream and reconstructs the first video sequence, the decoding end uses the video super-resolution network to perform video super-resolution processing on the reconstructed first video sequence, which has remarkable improvement on video quality. Because the application scenario of the video super resolution network is similar to the training scenario at the same time, both are used to recover the resolution of the video picture after down-sampling However, if the encoding end does not perform down-sampling on the video picture, even if the quality of decoded video cannot meet the requirements, the decoding end uses the video super-resolution network trained in the above manner to enhance the quality of the decoded video sequence, which has limited or no effect on improving the video quality. Therefore, the encoding end generates the down-sampling flag and signals the down-sampling flag in the bitstream, so that the decoding end may determine whether to perform video super-resolution processing according to the down-sampling flag or whether to perform video super-resolution processing according to the down-sampling flag and other conditions, which is beneficial to the decoding end to reasonably determine whether to perform video super-resolution processing.

In an exemplary embodiment of the present disclosure, the operation that it is determined whether to perform down-sampling on a video sequence from a data source includes that: it is determined to perform down-sampling on the video sequence from the data source when any one of following conditions is satisfied:
a bandwidth available for transmitting a video bitstream is less than a bandwidth required for transmitting the video bitstream without down-sampling;
resources of an encoding end do not support directly video encoding for the video sequence from the data source; and
the video sequence from the data source belongs to a specified video sequence that needs to be down-sampled.

While there are several cases where down-sampling needs to be performed on a video sequence from a data source, this is only indicative and it is entirely possible that there are other cases where down-sampling needs to be performed on the video sequence. The present disclosure is not limited in this.

In an exemplary embodiment of the present disclosure, the video encoding processing method further includes that: when performing video encoding, a network parameter of a video super-resolution network corresponding to the video sequence from the data source is acquired, and the network parameter is signalled in a bitstream. For example, for a certain video resource, the encoding end may make samples for training according to the video resource in advance to train the video super-resolution network, so as to obtain the network parameters of the video super-resolution network corresponding to the video resource, then the network parameter can be stored together with the video resource, and when the video resource is encoded, the network parameter are read, encoded and signalled in a bitstream. In this way, the decoding end can analyze the network parameter, and configure the video super-resolution network by using the network parameter, so as to obtain the expected quality enhancement effect.

The video encoding processing method of the embodiments may determine, according to the situation of bandwidth and the like, whether to perform down-sampling when pre-processing the video picture, so that the encoding end can adaptively select a suitable encoding processing method to adapt to the changes of network environment, encoding resources and the like.

There is also provided a video decoding processing method in an embodiment of the present disclosure, as illustrated in FIG. 10, the method includes the following operations.

At operation 310, a bitstream is decoded to obtain a first video sequence.

At operation 320, it is determined whether the first video sequence satisfies a set super-resolution condition. If yes, operation 330 is executed, and if no, operation 340 is executed.

At operation 330, in a case that the set super-resolution condition is satisfied, the first video sequence is outputted to a video super-resolution network to perform video super-resolution processing, and a second video sequence is obtained, where a resolution of the second video sequence is greater than a resolution of the first video sequence.

At operation 340, in a case that the first video sequence does not satisfy the set super-resolution condition, the super-resolution processing for the first video sequence is skipped.

After skipping the video super-resolution processing or performing the video super-resolution processing to obtain the second video sequence, the subsequent decoding post-processing process may be performed, or the video may be displayed and played.

In an example of the present embodiment, the video super-resolution network employs the video super-resolution network described in any embodiment of the present disclosure. However, in other examples of the present embodiment, other video super-resolution networks may be employed to perform the video super-resolution processing of the present embodiment.

In an example of the embodiment, the video super-resolution network includes a generator network. When the generator network is trained, a first video sequence as a sample is taken as input data, and a real video sequence is taken as target data. A resolution of the real video sequence is the same as that of the second video sequence, and the first video sequence as a sample is obtained by performing down-sampling on the real video sequence. In the present disclosure, the input when training the generator network is a first video sequence as a sample, and the input when after training the generator network may be a decoded first video sequence (or a first video sequence from a data source, etc.). The resolution of the first video sequence as a sample is same as that the decoded first video sequence, and the contents may be different. In the process of performing down-sampling on the real video sequence to obtain the first video sequence, other processes besides down-sampling may also be performed, such as compression encoding and decoding after down-sampling. The video super-resolution network trained according to the example is suitable for recovering the low resolution video sequence which is down-sampled and then compressed, encoded and decoded into the high resolution video sequence.

In an exemplary embodiment of the present disclosure, the bitstream is decoded to further obtain a down-sampling flag, where the down-sampling flag is used to indicate whether a pre-processing of the first video sequence by an encoding end includes a down-sampling; the set super-resolution condition at least includes: the down-sampling flag indicates that the pre-processing of the first video sequence by the encoding end includes the down-sampling. In an example, it may be determined to skip video super-resolution processing of the first video sequence in a case that the down-sampling flag indicates that the pre-processing of the first video sequence by the encoding end does not include the down-sampling. The down-sampling flag itself is used to indicate whether the pre-processing of the video picture by the encoding end includes the down-sampling, and the down-sampling flag here may be used to indicate that the pre-processing of the first video sequence by the encoding end includes the down-sampling, meaning that the down-sampling flag is associated with the first video sequence, e.g. belonging to the same encoding unit.

As described above, when the video super-resolution network uses the training samples obtained by performing down-sampling, the down-sampling flag can help the decoding end to determine whether the encoding end has performed down-sampling during video pre-processing, so as to better determine whether to perform video super-resolution processing. Simply according to the quality of the decoded video, the video super-resolution is performed when the video quality does not reach a certain fixed threshold, and the video super-resolution is not performed when the video quality reaches the threshold, without considering the expected effect of the video super-resolution, which is relatively mechanical and has limitations. If the encoding end has performed down-sampling and the quality of decoded video just reaches the threshold, then video super-resolution may be performed to improve the video quality. If there is no down-sampling at the encoding end, the quality of the decoded video cannot reach the threshold due to other factors, such as poor resolution of the camera itself and large noise in the transmission path, so the video super-resolution cannot be performed at this time.

In an exemplary embodiment of the present disclosure, the set super-resolution condition includes one condition or any combination of the following conditions:
a picture quality of the first video sequence is lower than a set quality requirement;
a pre-processing of the first video sequence by an encoding end includes a down-sampling; and
a video super-resolution function of a decoding end is in an available state;
in a case that the first video sequence does not satisfy the set super-resolution condition, it is determined to skip the super-resolution processing for the first video sequence.

The above-mentioned super-resolution conditions may be used in combination. For example, when the picture quality of the first video sequence is lower than a set quality requirement, the encoding end performs down-sampling on the first video sequence, and the video super-resolution function of the decoding end is in an available state, it is determined to execute the super-resolution processing on the first video sequence. However, the conditions here are not exhaustive, and there may be other conditions. The above quality requirements can be expressed by the evaluation indexes such as set Peak Signal to Noise Ratio (PSNR), Structural Similarity (SSIM), Mean Square Error (MSE), etc.

In the embodiment, the video super-resolution network is applied to the video processing flow. Before compression encoding, down-sampling is performed on the video in space and time, which greatly reduces the amount of video data to be encoded. After decoding, the trained video super-resolution network is used for corresponding up-sampling to recover the original video. Generally speaking, the bit rate is obviously reduced, the encoding efficiency is greatly improved, and the transmission bitstream is reduced.

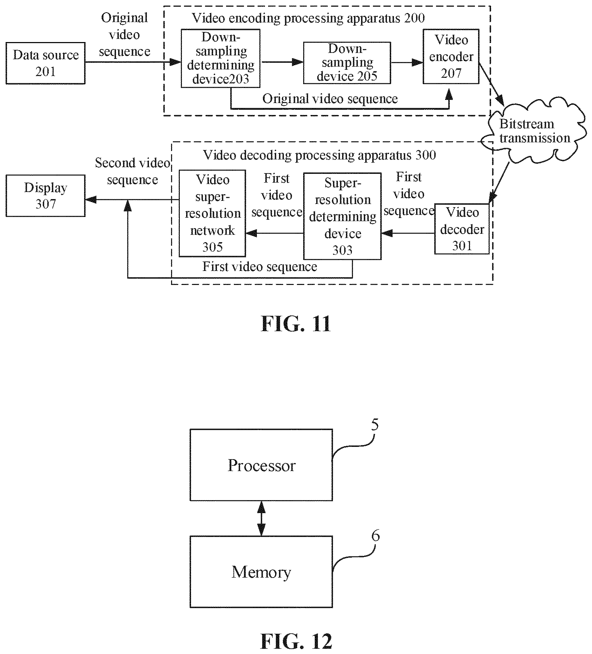

There is also provided a video encoding and decoding system in an embodiment of the present disclosure, as illustrated in FIG. 11, the system includes an encoding end device and a decoding end device.

The encoding end device includes a data source 201 and a video encoding processing apparatus 200, the data source 201 may be a video capture device (e.g., a camera), an archive containing previously captured data, a feed interface for receiving data from a content provider, a computer graphics system for generating data, or a combination of these sources. The video encoding processing apparatus 200 may be implemented using any of the following circuits or any combination of the following circuits: one or more microprocessors, digital signal processors, application specific integrated circuits, field programmable gate arrays, discrete logic, hardware. If the present disclosure is implemented in part in software, instructions for the software may be stored in a suitable non-volatile computer-readable storage medium, and the methods of the present disclosure may be implemented by executing the instructions in hardware using one or more processors. The video encoding processing apparatus 200 may implement the video encoding processing method described in any embodiment of the present disclosure based on the above-described circuits.

As illustrated in FIG. 11, the video encoding processing apparatus 200 includes a down-sampling determining device 203, a down-sampling device 205 and a video encoder 207.

The down-sampling determining device 203 is configured to determine whether to perform down-sampling on a video sequence from a data source when performing video pre-processing, in a case of determining to perform down-sampling, output the video sequence from the data source to a down-sampling device, in a case of determining not to perform down-sampling, output the video sequence from the data source directly to a video encoder for video encoding.

The down-sampling device 205 is configured to perform down-sampling on an inputted video sequence and output a down-sampled video sequence to the video encoder for encoding.

The video encoder 207 is configured to perform video encoding on the video sequence from the data source or the down-sampled video sequence.

In an exemplary embodiment of the present disclosure, the down-sampling determining device 203 determining whether to perform down-sampling on a video sequence from a data source includes determining to perform down-sampling on the video sequence from the data source when any one of following conditions is satisfied:
a bandwidth available for transmitting a video bitstream is less than a bandwidth required for transmitting the video bitstream without down-sampling;
resources of an encoding end do not support directly video encoding for the video sequence from the data source; and
the video sequence from the data source belongs to a specified video sequence that needs to be down-sampled.

In an exemplary embodiment of the present disclosure, the operation of the down-sampling device 205 performing down-sampling on the video sequence from a data source includes: performing down-sampling on a picture resolution and/or a video frame rate of the video sequence from the data source.

In an exemplary embodiment of the present disclosure, the down-sampling determining device 203 is further configured to generate a down-sampling flag and output to the video encoder 207, the down-sampling flag is used for indicating whether the pre-processing of the video sequence from the data source by an encoder includes the down-sampling. The video encoder 207 is further configured to signal the down-sampling flag to the bitstream when video encoding is performed. The down-sampling flag herein may be used to indicate that the pre-processing of the video sequence from the data source by the encoding end includes the down-sampling, indicating that the down-sampling flag herein is associated with the video sequence from the data source, such as belonging to the same encoding unit.

As illustrated in FIG. 11, the decoding end device includes a video decoding processing apparatus 300 and a display 307, and the display 307 may be a liquid crystal display, a plasma display, an organic light emitting diode display, or other type of display device. The video decoding processing apparatus 300 may be implemented using any of the following circuits or any combination of the following circuits: one or more microprocessors, digital signal processors, application specific integrated circuits, field programmable gate arrays, discrete logic, hardware. If the present disclosure is implemented in part in software, instructions for the software may be stored in a suitable non-volatile computer-readable storage medium, and the methods of the present disclosure may be implemented by executing the instructions in hardware using one or more processors. The video decoding processing apparatus 300 may implement the video decoding processing method described in any embodiment of the present disclosure based on the above-described circuits.

The video decoding processing apparatus 300 further includes a video decoder 301, a super-resolution determining device 303 and a video super-resolution network 305.

The video decoder 301 is configured to decode a bitstream to obtain a first video sequence.

The super-resolution determining device 303 is configured to determine whether the first video sequence satisfies a set super-resolution condition, in a case that the set super-resolution condition is satisfied, output the first video sequence to a video super-resolution network for video super-resolution processing; and in a case that the set super-resolution condition is not satisfied, determine to skip a video super-resolution processing for the first video sequence.

The video super-resolution network 305 is configured to perform video super-resolution processing on the first video sequence to obtain a second video sequence with a resolution greater than that of the first video sequence.

In an exemplary embodiment of the present disclosure, the video super-resolution network employs the video super-resolution network as described in any embodiment of the present disclosure.

In an exemplary embodiment of the present disclosure, a first video sequence as a sample is taken as input data and a real video sequence is taken as target data when training the generator network in the video super-resolution network, and the first video sequence as a sample is obtained by performing down-sampling on the real video sequence. The video super-resolution network trained in this manner is suitable for recovering the low resolution video sequence after down-sampling, compression encoding and decoding into the high resolution video sequence, and has good quality enhancement effect.

In an exemplary embodiment of the present disclosure, the video decoder decodes the bitstream and further extracts a down-sampling flag from the bitstream, the down-sampling flag is used to indicate whether the pre-processing of the first video sequence by an encoding end includes the down-sampling. The super-resolution condition used by the super-resolution determining device at least includes: the down-sampling flag indicates that the pre-processing of the first video sequence by the encoding end includes the down-sampling. In an example, the super-resolution determining device may determine not to perform super-resolution processing on the first video sequence if the down-sampling flag indicates that the pre-processing of the first video sequence by an encoding end does not include the down-sampling.

In an exemplary embodiment of the present disclosure, the set super-resolution condition used by the super-resolution determining device includes one condition or any combination of the following conditions:
a picture quality of the first video sequence is lower than a set quality requirement;
a pre-processing of the first video sequence by an encoding end includes a down-sampling; and
a video super-resolution function of a decoding end is in an available state;
in a case that the first video sequence does not satisfy the set super-resolution condition, the super-resolution determining device may determine to skip the super-resolution processing for the first video sequence.

In the video encoding and decoding system based on the embodiment of the present disclosure, the encoding end determines whether the video sequence needs to be down-sampled according to the bandwidth and environment and other factors detected at present in the video pre-processing stage, if necessary (for example, when the bandwidth is insufficient), the corresponding down-sampling multiple is selected to perform down-sampling on the spatial resolution and/or time resolution of the video sequence, and then the video sequence is encoded into a bitstream for transmission. At the decoding end, the corresponding decoder is used to decode, and the quality of the decoded video picture is not high, so the decoded video picture may be sent to the video super-resolution network for quality improvement, and the video with the required spatial resolution and temporal resolution may be obtained. When the bandwidth becomes larger, the encoding end may directly encode the video sequence from the data source into a bitstream for transmission, and the decoding end can directly decode to obtain high-quality video without video super-resolution. No matter whether the encoder performs down-sampling or not, the same video encoder can be used for encoding, which is relatively simple in encoding operation and occupies less resources.

There is also provided a video encoding processing apparatus, as illustrated in FIG. 12. The video encoding processing apparatus includes a processor 5 and a memory 6 storing a computer program executable by the processor 5, herein the processor 5 is configured to implement, when running the computer program, the video encoding processing method as described in any embodiment of the present disclosure.

There is also provided a video decoding processing apparatus, as illustrated in FIG. 12. The video decoding processing apparatus includes a processor and a memory storing a computer program executable by the processor, herein the processor is configured to implement, when running the computer program, the video decoding processing method as described in any embodiment of the present disclosure.

There is also provided a video super-resolution processing apparatus, including a processor and a memory storing a computer program executable by the processor, herein the processor is configured to implement, when running the computer program, the video super-resolution processing method as described in any embodiment of the present disclosure.

There is also provided a video encoding and decoding system in an embodiment of the present disclosure, which includes a video encoding processing apparatus as described in any embodiment of the present disclosure and a video decoding processing apparatus as described in any embodiment of the present disclosure.

There is also provided a bitstream in an embodiment of the present disclosure, where the bitstream is generated according to the video encoding processing method of the embodiments of the present disclosure, and the bitstream includes the down-sampling flag.

There is also provided a non-transitory computer-readable storage medium in an embodiment of the present disclosure, having stored thereon a computer program, herein the computer program is executed by a processor to implement the video encoding processing method or the video decoding processing method as described in any embodiment of the present disclosure.

In one or more exemplary embodiments, the described functionality may be implemented in hardware, software, firmware, or any combination thereof. If implemented in software, the function may be stored on or transmitted via a computer-readable medium as one or more instructions or codes and executed by a hardware-based processing unit. The computer-readable medium may include a computer-readable storage medium corresponding to a tangible medium, such as a data storage medium, or a communication medium that includes any medium that facilitates the transfer of a computer program from one place to another, such as in accordance with a communication protocol. In this manner, the computer-readable medium may generally correspond to a non-transitory tangible computer-readable storage medium or a communication medium such as a signal or carrier wave. The data storage medium may be any available medium accessible by one or more computers or one or more processors to retrieve instructions, codes, and/or data structures for implementing the techniques described in the present disclosure. The computer program product may include a computer readable medium.

By way of example and not limitation, such computer-readable storage medium may include RAM, ROM, EEPROM, CD-ROM or other optical disk storage device, disk storage device or other magnetic storage device, flash memory, or any other medium that may be used to store desired program code in the form of instructions or data structures and that may be accessed by a computer. Furthermore, any connection may also be referred to as a computer-readable medium. For example, if coaxial cable, fiber optic cable, twisted pair, digital subscriber line (DSL), or wireless technologies such as infrared, radio, and microwave are used to transmit instructions from a Web site, server or other remote source, the coaxial cable, the fiber optic cable, the double rib, the DSL, or the wireless technologies such as infrared, radio, and microwave are included in the definition of the medium. However, it should be understood that computer-readable storage medium and data storage medium do not contain connections, carriers, signals, or other transitory (transitory state) medium, but are intended for non- transitory tangible storage medium. As used herein, magnetic disks and optical discs include compact discs (CD), laser discs, optical discs, digital versatile discs (DVD), floppy discs or blue-ray discs, etc., where the magnetic disks generally reproduce data magnetically, while optical discs reproduce data optically using lasers. The above combination should also be included in the scope of computer readable medium.

The instructions may be executed by one or more processors, such as one or more digital signal processors (DSP), general purpose microprocessors, application specific integrated circuit (ASIC), field programmable logic arrays (FPGA), or other equivalent integrated or discrete logic circuits. Thus, the term "processor" as used herein may refer to any of the above-described architectures or any other architecture suitable for implementing the techniques described herein. Additionally, in some aspects, the functionality described herein may be provided within dedicated hardware and/or software modules configured for encoding and decoding or incorporated in a combined codec. Furthermore, the techniques may be fully implemented in one or more circuits or logic elements.

The embodiment of the present disclosure may be implemented in a wide variety of equipment or devices including a wireless handset, an integrated circuit (IC) or a set of ICs (e.g. a chipset). Various components, modules or units are described in embodiments of the present disclosure to emphasize functional aspects of an apparatus configured to perform the described techniques, but need not be implemented by different hardware units. Rather, as described above, the various units may be combined in a codec hardware unit or provided by a collection of interoperable hardware units (including one or more processors as described above) in combination with suitable software and/or firmware.

## Claims

1. A video super-resolution network, comprising a generator network, wherein the generator network comprises a first feature extraction section, a second feature extraction section and a reconstruction section connected in sequence, wherein
the first feature extraction section is configured to receive a first video sequence, extract a first feature from the first video sequence based on a three dimensional (3D) convolution, and output the first feature;
the second feature extraction section is configured to receive the first feature, extract a second feature in time and/or space from the first feature based on a 3D residual attention mechanism, and output the second feature; and
the reconstruction section is configured to receive the second feature, realize feature fusion and spatio-temporal super-resolution of features based on the 3D convolution and a 3D up-sampling, reconstruct a video sequence based on the 3D convolution, and generate a second video sequence, and a resolution of the second video sequence is greater than a resolution of the first video sequence.

2. The video super-resolution network of claim 1, wherein
the first feature extraction section comprises a 3D convolution layer and an activation layer connected in sequence, and an input of the 3D convolution layer is the first video sequence, and an output of the activation layer is the first feature.

3. The video super-resolution network of claim 1, wherein
the second feature extraction section comprises a plurality of residual attention blocks (RABs) connected in sequence, an input of a first RAB is the first feature, an input of each of other RABs except the first RAB is an output of a previous RAB, and an output of a last RAB is the second feature; an RAB comprises a 3D convolution layer, an activation layer and a 3D attention mechanism model unit connected in sequence, an input of the RAB is sent to the 3D convolution layer, and the input of the RAB has a skip connection with an output of the 3D attention mechanism model unit and is added with the output of the 3D attention mechanism model unit to obtain a sum as an output of the RAB.

4. The video super-resolution network of claim 3, wherein
the 3D attention mechanism model unit is a 3D convolution block attention model, the 3D convolution block attention model comprises a 3D channel attention module and a 3D spatial attention module connected in sequence, an input of the 3D attention mechanism model unit is sent to the 3D channel attention module, a first product obtained by multiplying an input and an output of the 3D channel attention module is used as an input of the 3D spatial attention module, and a second product obtained by multiplying an output of the 3D spatial attention module and the first product is used as the output of the 3D attention mechanism model unit.

5. The video super-resolution network of claim 1, wherein
the reconstruction section comprises following units connected in sequence:
a 3D convolution unit for fusing features, comprising a 3D convolution layer and an activation layer connected in sequence, wherein an input of the 3D convolution unit for fusing features is the second feature;
a 3D transposed convolution unit for realizing spatio-temporal super-resolution of the features, comprising a 3D transposed convolution layer and an activation layer connected in sequence, wherein an input of the 3D transposed convolution unit is an output of the 3D convolution unit for fusing features; and
a 3D convolution layer for generating a video sequence, an input being an output of the 3D transposed convolution unit and an output being the second video sequence;
wherein an image resolution of the second video sequence is greater than an image resolution of the first video sequence, and/or a video frame rate of the second video sequence is greater than a video frame rate of the first video sequence.

6. The video super-resolution network of any one of claims 2 to 5, wherein
an activation function used by the activation layer is a Parametric Rectifier Linear Unit (PReLu).

7. The video super-resolution network of claim 1, wherein
the video super-resolution network further comprises: a discriminator network, configured to, during training, take a real video sequence and the second video sequence generated during training the generator network as inputs, extract detail features and motion information features between video pictures from inputted video sequences, and determine a probability that an inputted video sequence is the real video sequence based on the detail features and the motion information features, wherein a resolution of the real video sequence is the same as the resolution of the second video sequence, and the first video sequence received during training the generator network is obtained by performing down-sampling on the real video sequence.

8. The video super-resolution network of claim 7, wherein
the discrimination network comprises a first branch, a second branch, an information fusion unit connected with the first branch and the second branch, and a weight calculation unit connected with the information fusion unit, wherein
the first branch is configured to extract the detail features from the inputted video sequences based on a feature extraction network, and determine an authenticity based on the detail features;
the second branch is configured to extract the motion information features between video pictures from the inputted video sequences based on an optical flow network, and determine an authenticity based on the motion information features;
the information fusion unit is configured to fuse authenticity determination results outputted by the first branch and the second branch; and
the weight calculation unit is configured to calculate a weight according to fused information outputted by the information fusion unit, and obtain the probability that the inputted video sequence is the real video sequence.

9. The video super-resolution network of claim 8, wherein
the information fusion unit is realized by adopting a fully connected layer; and
the weight calculation unit is realized by a sigmoid function.

10. The video super-resolution network of claim 8, wherein
the first branch comprises following units connected in sequence:
a 2D convolution unit, comprising a 2D convolution layer and an activation layer connected in sequence;
a plurality of 2D convolution plus normalization units, each comprising a 2D convolution layer, a batch normalization (BN) layer and an activation layer connected in sequence; and
a fully connected unit, comprising a fully connected layer and an activation layer connected in sequence.

11. The video super-resolution network of claim 8, wherein
the second branch comprises following units connected in sequence:
N 2D convolution plus normalization units, each comprising a 2D convolution layer, a BN layer and an activation layer connected in sequence, N ≥ 2;
M 2D deconvolution units, each comprising a 2D deconvolution layer and an active layer, M ≥ 2; and
a fully connected unit, comprising a fully connected layer and an activation layer connected in sequence.

12. The video super-resolution network of claim 11, wherein
an output of a 2i-th 2D convolution plus normalization unit is further connected to an input of an (M-i+1)-th 2D deconvolution unit, 1 ≤ i ≤ M, N = 2M + 1.

13. The video super-resolution network of claim 10 or 11, wherein
an activation function used by the activation layer is a Leak Rectified Linear Unit (LeakReLu).

14. A video super-resolution processing method, comprising:
extracting a first feature from a first video sequence based on a 3D convolution;
extracting a second feature in time and/or space based on a 3D residual attention mechanism; and
realizing feature fusion and spatio-temporal super-resolution of features for the second feature based on the 3D convolution and a 3D up-sampling; reconstructing a video sequence based on the 3D convolution, and generating a second video sequence, wherein a resolution of the second video sequence is greater than a resolution of the first video sequence.

15. The video super-resolution processing method of claim 14, wherein
the video super-resolution processing method is implemented based on the video super-resolution network of any one of claims 1 to 13.

16. The video super-resolution processing method of claim 14, wherein
the first video sequence is a decoded video sequence outputted by decoding a bitstream; or
the first video sequence is an original video sequence collected by a video acquisition device; or
the first video sequence is a reference picture that needs to be up-sampled acquired from a decoded picture buffer of a video encoder; or
the first video sequence is a reconstructed video sequence of a base layer or a reconstructed video sequence of an enhance sub-layer generated in a scalable video encoding architecture comprising the base layer and the enhance layer; or
the first video sequence is a decoded video sequence of a base layer or a combined intermediate picture of an enhance sub-layer generated in a scalable video decoding architecture comprising the base layer and the enhance layer.

17. The video super-resolution processing method of claim 14 or 15, wherein
the first video sequence is a decoded video sequence outputted by decoding a bitstream; and
the video super-resolution processing method further comprises: phasing, from the bitstream, network parameter information of a video super-resolution network sent by an encoding end, and setting a network parameter of the video super-resolution network according to the network parameter information.

18. A video decoding method, comprising:
decoding a bitstream to obtain a first video sequence;
determining whether the first video sequence satisfies a set super-resolution condition; and
in a case that the set super-resolution condition is satisfied, outputting the first video sequence to a video super-resolution network to perform video super-resolution processing, and obtaining a second video sequence, wherein a resolution of the second video sequence is greater than a resolution of the first video sequence.

19. The video decoding processing method of claim 18, wherein
the video super-resolution network employs the video super-resolution network of any one of claims 1 to 13.

20. The video decoding processing method of claim 18, wherein
the video super-resolution network comprises a generator network, when training the generator network, a first video sequence as a sample is taken as input data, and a real video sequence is taken as target data, wherein a resolution of the real video sequence is the same as the resolution of the second video sequence, and the first video sequence as the sample is obtained by performing down-sampling on the real video sequence.

21. The video decoding processing method of claim 18, 19 or 20, wherein
the bitstream is decoded to further obtain a down-sampling flag, wherein the down-sampling flag is used to indicate whether a pre-processing of the first video sequence by an encoding end comprises a down-sampling;
the set super-resolution condition at least comprises: the down-sampling flag indicates that the pre-processing of the first video sequence by the encoding end comprises the down-sampling.

22. The video decoding processing method of claim 18, wherein
the set super-resolution condition comprises one condition or any combination of following conditions: a picture quality of the first video sequence is lower than a set quality requirement; a pre-processing of the first video sequence by an encoding end comprises a down-sampling; and a video super-resolution function of a decoding end is in an available state;
in a case that the first video sequence does not satisfy the set super-resolution condition, the super-resolution processing for the first video sequence is skipped.

23. A video encoding processing method, comprising:
determining whether to perform down-sampling on a video sequence from a data source when performing video pre-processing;
in a case of determining not to perform down-sampling, inputting the video sequence from the data source directly into a video encoder for video encoding; and
in a case of determining to perform down-sampling, performing down-sampling on the video sequence from the data source, and inputting a down-sampled video sequence into the video encoder for video encoding.

24. The video encoding processing method of claim 23, wherein
the video encoding processing method further comprises:
when performing video encoding, signaling a down-sampling flag in a bitstream, the down-sampling flag being used to indicate whether a pre-processing of the video sequence from the data source by an encoding end comprises a down-sampling.

25. The video encoding processing method of claim 23, wherein
determining whether to perform down-sampling on the video sequence from the data source comprises: determining to perform down-sampling on the video sequence from the data source when any one of following conditions is satisfied:
a bandwidth available for transmitting a video bitstream is less than a bandwidth required for transmitting the video bitstream without down-sampling:
resources of an encoding end do not support directly video encoding for the video sequence from the data source;
the video sequence from the data source belongs to a specified video sequence that needs to be down-sampled.

26. The video encoding processing method of claim 23, 24 or 25, wherein
the video encoding processing method further comprises:
when performing video encoding, acquiring a network parameter of a video super-resolution network corresponding to the video sequence from the data source, and signalling the network parameter in a bitstream.

27. A video super-resolution processing apparatus, comprising a processor and a memory storing a computer program executable by the processor, wherein the processor, when executing the computer program, implements the video super-resolution processing method of any one of claims 14 to 17.

28. A video decoding processing apparatus, comprising a processor and a memory storing a computer program executable by the processor, wherein the processor, when executing the computer program, implements the video decoding processing method of any one of claims 18 to 22.

29. A video decoding processing apparatus, comprising:
a video decoder, configured to decode a bitstream to obtain a first video sequence;
a super-resolution determining device, configured to determine whether the first video sequence satisfies a set super-resolution condition, in a case that the set super-resolution condition is satisfied, output the first video sequence to a video super-resolution network for video super-resolution processing; and in a case that the set super-resolution condition is not satisfied, determine to skip a video super-resolution processing for the first video sequence; and
a video super-resolution network, configured to perform video super-resolution processing on the first video sequence, and obtain a second video sequence with a resolution greater than that of the first video sequence.

30. The video decoding processing apparatus of claim 29, wherein
when decoding the bitstream, the video decoder further extracts a down-sampling flag from the bitstream, and the down-sampling flag is used to indicate whether a pre-processing of the first video sequence by an encoding end comprises a down-sampling;
the super-resolution condition used by the super-resolution determining device at least comprises that: the down-sampling flag indicates that the pre-processing of the first video sequence by the encoding end comprises the down-sampling.

31. A video encoding processing apparatus, comprising a processor and a memory storing a computer program executable by the processor, wherein the processor, when executing the computer program, implements the video encoding processing method of any one of claims 23 to 26.

32. A video encoding processing apparatus, comprising:
a down-sampling determining module, configured to determine whether to perform down-sampling on a video sequence from a data source when performing video pre-processing, in a case of determining to perform down-sampling, output the video sequence from the data source to a down-sampling device, in a case of determining not to perform down-sampling, output the video sequence from the data source directly to a video encoder for video encoding;
the down-sampling device, configured to perform down-sampling on an inputted video sequence, and output a down-sampled video sequence to the video encoder for encoding; and
a video encoder, configured to perform video encoding on the video sequence from the data source or the down-sampled video sequence.

33. The video encoding processing apparatus of claim 32, wherein
the down-sampling determining device is further configured to generate and output a down-sampling flag to the video encoder, wherein the down-sampling flag is used to indicate whether a pre-processing of the video sequence from the data source by an encoding end comprises a down-sampling, and
the video encoder is further configured to signal the down-sampling flag in a bitstream when performing video encoding.

34. A video encoding and decoding system, comprising a video encoding processing apparatus of any one of claims 31 to 33 and a video decoding processing apparatus of any one of claims 28 to 30.

35. A bitstream, wherein the bitstream is generated according to the video encoding processing method of claim 24, and the bitstream comprises the down-sampling flag; or the bitstream is generated according to the video encoding processing method of claim 26, and the bitstream comprises the network parameter.

36. A non-transitory computer-readable storage medium, having stored thereon a computer program, wherein the computer program, when being executed by a processor, implements the method of any one of claims 14 to 26.
